(19) Europäisches Patentamt
European Patent Office
Office européen des brevets

(11) Numéro de publication: **0 133 102 B1**

(12) **FASCICULE DE BREVET EUROPEEN**

(45) Date de publication du fascicule du brevet: **08.02.89**

(51) Int. Cl.⁴: **C 09 K 3/14**

(21) Numéro de dépôt: **84401495.1**

(22) Date de dépôt: **16.07.84**

(54) **Composition de polissage à base de cérium et son procédé de fabrication.**

(30) Priorité: **29.07.83 FR 8312519**

(43) Date de publication de la demande: **13.02.85 Bulletin 85/7**

(45) Mention de la délivrance du brevet: **08.02.89 Bulletin 89/6**

(84) Etats contractants désignés: **AT BE CH DE FR GB IT LI NL SE**

(56) Documents cités:
**EP-A-0 031 749**
**FR-A-1 535 239**
**US-A-3 262 766**

**Le dossier contient des informations techniques présentées postérieurement au dépôt de la demande et ne figurant pas dans le présent fascicule.**

(73) Titulaire: **RHONE-POULENC CHIMIE, 25, quai Paul Doumer, F-92408 Courbevoie Cédex (FR)**

(72) Inventeur: **Melard, Pierre, 39, rue Alfred Nobel, F-17140 Lagord (FR)**
Inventeur: **Peltier, Marcel, 273, avenue Carnot, F-17000 La Rochelle (FR)**
Inventeur: **Tastu, Francis, Lotissement Les Tamaris Cour des Alouettes No. 1, Lauzières F-17137 Nieul/Sur/Mer (FR)**

(74) Mandataire: **Dutruc-Rosset, Marie-Claude et al, RHONE-POULENC INTERSERVICES Service Brevets Chimie 25, Quai Paul Doumer, F-92408 Courbevoie Cédex (FR)**

**EP 0 133 102 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rapporte à une composition de polissage à base de cérium son procédé de fabrication et ses applications au polissage du verre, des matières céramiques et autres matières de type vitreux.

Parmi les compositions de polissage utilisées actuellement dans l'industrie du verre, celles à base de terres rares, et, en particulier, de cérium s'avèrent généralement les plus performantes. On connaît divers procédés de fabrication de telles compositions. Ainsi, il a été proposé selon DE-A-2 426 110 de précipiter par l'hydroxyde de sodium une solution aqueuse de sulfate de terres rares en présence de molochite, de filtrer, laver, sécher et calciner le produit résultant pour obtenir la composition de polissage désirée. Un tel procédé ne permet pas d'obtenir des compositions de polissage présentant une efficacité entièrement satisfaisante en raison notamment de l'hétérogénéité, de la structure non définie et de la non-reproductibilité des produits obtenus. Ces inconvénients proviennent notamment des conditions opératoires du procédé selon lesquelles la concentration des réactifs évolue au cours de la réaction et ne permet pas d'obtenir des produits définis de façon reproductible; ils proviennent également de l'existence de composés étrangers (molochite) et de la présence de sulfates dont la précipitation par l'hydroxyde de sodium donne des mélanges de produits complexes tels que les sulfates doubles, hydroxysulfates et hydroxydes dont la quantité et la nature peuvent varier au cours de la réaction.

Il a également été proposé (Chemical Abstracts 80, 51688, 1974) de fabriquer des compositions de polissage à base de cérium en précipitant de l'hydroxyde cérique par de l'ammoniaque sur une solution de nitrate de terre rare dans laquelle le cérium a été préalablement oxydé. Un tel procédé nécessite une étape supplémentaire de purification par recristallisation par le nitrate cériammonique et une reprise de l'oxyde calciné par un acide dilué; les produits obtenus ne possèdent pas une efficacité polissante satisfaisante. Par ailleurs, de telles compositions ne présentent pas des qualités d'homogénéité, de structure et de reproductibilité satisfaisantes.

On connaît, d'après US-A-3 768 989, un procédé de préparation de compositions de polissage par formation d'un précipité de carbonate de terres rares-wollastonite, séparation du précipité et calcination. On connaît également d'après US-A-3 262 766 des compositions de polissage fabriquées par traitement de solutions de carbonates de terres rares du commerce avec de l'acide fluosilicique ou hydrofluosilicique. Les compositions de polissage préparées selon les procédés décrits dans ces deux brevets américains présentent des inconvénients analogues à ceux qui ont été décrits ci-dessus pour les compositions du DE-A-2 426 110.

Pour remédier aux inconvénients des procédés précités la demanderesse a proposé selon EP-A-0 031 749 un nouveau procédé de fabrication de compositions de polissage caractérisé en ce qu'il comporte les étapes suivantes:

a) on mélange simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en œuvre étant supérieur ou égal au nombre d'équivalents cérium et le pH du milieu réactionnel étant supérieur à 6;

b) on filtre le précipité obtenu;

c) on le sèche;

d) on le calcine.

Ce procédé conduit à l'obtention de compositions qui présentent de bonnes qualités d'homogénéité, de reproductibilité, une bonne tenue en suspension dans l'eau et une bonne efficacité polissante. Cependant, le procédé précédemment décrit ne donne pas entièrement satisfaction car l'anion habituellement utilisé étant le fluorure, on rencontre les problèmes usuels liés à l'emploi du fluorure, notamment celui de la pollution des effluents qu'ils soient liquides ou gazeux.

Le problème qui se pose est donc de trouver une nouvelle composition de polissage qui satisfasse aux impératifs suivants:

– être efficace, c'est-à-dire permettre le polissage d'une face de verre généralement doucie, le plus rapidement possible.

– être propre, c'est-à-dire ne pas rayer le verre pendant le travail de polissage.

– ne pas provoquer de réaction défavorable en surface, c'est-à-dire ne pas être chimiquement trop active vis-à-vis du verre; problème de brûlage, peau d'orange, cloques...

– avoir une durée de vie ou longévité très grande, pour être utilisée le plus longtemps possible sans inconvénient.

– avoir une bonne tenue en suspension, permettant une répartition homogène de la poudre dans le bain, et évitant les dépôts.

Cette dispersion doit être effective dès la mise en suspension et pendant tout le temps de travail.

– ne pas mousser, les mousses provoquent des débordements, bouchent les tuyauteries, diminuent le rendement et gênent le personnel.

– être facile à remettre en suspension après arrêt prolongé et décantation, même si le bain est chargé en éléments du verre poli: phénomène de «caking».

– ne pas être toxique: afin d'éviter tous les problèmes de peaux ou autres maladies.

– être un produit régulier, de couleur agréable, facile à employer.

– ne pas coller au verre après polissage, donc permettre un nettoyage rapide.

– être facile à floculer, pour élimination des rejets usine.

L'objectif de la présente invention est de pourvoir le domaine technique considéré d'une nouvelle composition répondant aux exigences précitées.

Dans l'exposé qui suit de la présente invention, on entend par l'expression «verre», aussi bien le

verre que les matières céramiques et autres matières de type vitreux.

Il a maintenant été trouvé et c'est ce qui constitue l'objet principal de l'invention, une nouvelle composition de polissage à base de cérium comprenant au moins une phase cristallographique de type $CeO_2$ et une phase cristallographique constituée par un pyrosilicate de terres rares répondant à la formule $Ln_{2-x}Ce_xSi_2O_7$ dans laquelle Ln représente au moins un élément pris dans le groupe constitué par les lanthanides et l'yttrium et dans laquelle x est supérieur ou égal à 0 et inférieur à 2.

A côté de ces deux phases cristallographiques essentielles, les compositions peuvent contenir dans certains cas d'autres phases cristallisées d'oxydes de terres rares ou des phases d'oxyde de silicium plus ou moins cristallisées.

La demanderesse a découvert, de manière inattendue, que la principale cause des bonnes propriétés de polissage de la nouvelle composition de l'invention est la présence de la phase $Ln_{2-x}Ce_xSi_2O_7$.

Un autre objet de l'invention est la procédé de fabrication de cette nouvelle composition de polissage caractérisé par le fait qu'il consiste:

– à mélanger simultanément, une solution de sel de cérium, une solution basique, une solution aqueuse de sel d'au moins une terre rare trivalente ou d'yttrium et une solution d'au moins un dérivé oxygéné du silicium susceptible de former des composés insolubles de terres rares.

– à filtrer le précipité obtenu,

– à le sécher et à le calciner à une température supérieure à 850 °C.

On a constaté l'apparition de la phase cristallographique $Ln_{2-x}Ce_xSi_2O_7$ dans les conditions particulières de calcination à une température supérieure à 850 °C.

Dans la première étape du procédé, on réalise le mélange des différents réactifs.

La solution de sel de cérium mise en œuvre selon le procédé de l'invention peut être toute solution aqueuse de sel de cérium à l'état céreux et/ou cérique soluble dans les conditions de l'invention et, notamment, une solution de chlorure céreux ou de nitrate de cérium à l'état céreux ou cérique, ou du mélange des deux.

Le sel de cérium est choisi de telle sorte qu'il ne contienne pas d'impuretés qui puissent se retrouver dans la composition finale, après calcination. Il peut être avantageux de mettre en jeu un sel de cérium présentant un degré de pureté supérieur à 99%.

La concentration de la solution de sel de cérium n'est pas un facteur critique, selon l'invention. Elle peut varier dans de larges limites, entre 0,2 et 4 moles par litre; une concentration comprise entre 0,5 et 2 moles par litre est préférée.

Selon une variante préférée du procédé selon l'invention, on introduit le cérium dans le milieu réactionnel à l'état céreux et on l'oxyde à l'état cérique en ajoutant en continu au mélange réactionnel un agent oxydant compatible avec ce milieu. Parmi les agents oxydants pouvant convenir, on peut citer notamment des solutions de perchlorate, de chlorate, d'hypochlorite, de persulfate de sodium, de potassium ou d'ammonium, d'eau oxygénée, ou l'air, l'oxygène, l'ozone. On peut également oxyder le cérium par voie électrochimique.

On utilise de préférence l'eau oxygénée.

La proportion d'agent oxydant par rapport au sel céreux à oxyder peut varier dans de larges limites. Elle est en général supérieure à la stoechiométrie et correspond, de préférence, à un excès compris entre 10 et 40%.

La solution basique mise en œuvre selon le procédé de l'invention peut être notamment une solution aqueuse d'ammoniaque ou d'hydroxyde de sodium, de potasse ou de carbonate de sodium.

Selon l'invention, on met en œuvre de préférence une solution d'ammoniaque.

La normalité de la solution basique mise en œuvre n'est pas un facteur critique selon l'invention, elle peut varier dans de larges limites, elle sera toutefois avantageusement comprise entre 1 et 5 N.

La proportion entre la solution basique et la solution de sel de cérium doit être telle que le nombre d'équivalents de la solution basique introduits soit supérieur ou égal au nombre d'équivalents cérium introduits dans le même temps. Il peut être avantageux de mettre en œuvre un excès supérieur à 5% d'équivalents basiques par rapport aux équivalents cérium. Le pH du milieu réactionnel peut varier entre 5 et 10. Il est avantageusement compris entre 7 et 9. Il peut être particulièrement avantageux de régler le pH dans ces limites à une valeur constante à $+$ 0,1 unité de pH.

La solution aqueuse de sel d'au moins une terre rare trivalente ou d'yttrium doit être soluble dans les conditions de l'invention. Parmi les sels convenant bien, on citera notamment les chlorures ou les nitrates de lanthane, cérium, praséodyme, néodyme, samarium, europium, gadolinium, terbium, dysprosium, holmium, erbium, thulium, ytterbium, lutécium, d'yttrium. En particulier, on peut mettre en œuvre une solution contenant le sel de cérium et des sels de terres rares qui proviendrait directement ou indirectement du traitement des minerais de terres rares.

On met en œuvre, de préférence, des sels de lanthane ou de néodyme.

La concentration de la solution d'un ou des sels de terres rares mise en œuvre selon le procédé de l'invention n'est pas un facteur critique et elle peut varier dans de larges limites elle est, toutefois, de préférence, comprise entre 0,2 et 1 mole par litre.

La proportion entre la solution d'un sel de cérium et la solution aqueuse d'un ou des sels de terres rares trivalentes est telle que le rapport entre le dioxyde de cérium et les oxydes de terres rares ($CeO_2 + Ln_2O_3$) varie entre 60 et 85% en poids.

La solution d'au moins un dérivé oxygéné du silicium peut être toute solution aqueuse de dérivé oxygéné du silicium susceptible de former des composés insolubles de terres rares. Le ou les

dérivés du silicium doivent être solubles dans l'eau. On peut faire appel selon l'invention aux composés suivants: dioxyde de silicium, acide silicique et silicates de métaux alcalins. Plus précisément, on citera la silice amorphe, l'acide métasilicique, l'acide métadisilicique, l'orthosilicate de sodium, le silicate de sodium de formule $Na_2O$, $xSiO_2$ dans laquelle x varie de 3 à 5, le métasilicate de sodium, le métadisilicate de sodium, le métasilicate de potassium, le métadisilicate de potassium, le tétrasilicate de potassium. On peut employer indifféremment ces sels sous forme anhydre on hydratée.

On utilise de préférence le silicate de sodium $Na_20,4SiO_2$.

La concentration de la solution d'un ou des dérivés oxygénés du silicium n'est pas un facteur critique selon l'invention et elle peut varier dans de larges limites; lorsqu'elle est exprimée en moles/litre de $SiO_2$, elle est comprise entre 0,1 et 2,0.

La proportion entre la solution d'un ou des dérivés oxygénés du silicium et la solution aqueuse d'un ou des sels de terres rares trivalentes est définie de façon à avoir un rapport entre les équivalents silicate ($SiO_3^{=}$) et les équivalents terre(s) rare(s) trivalente(s) qui se situe entre 0,1 et 1, de préférence, entre 0,2 et 0,6.

Dans le procédé de l'invention le nombre d'équivalents anioniques mis en œuvre est supérieur ou égal au nombre d'équivalents cationiques mis en œuvre; il ne doit toutefois pas conduire à la formation de composés d'adsorption sur la composition obtenue par le mélange des réactifs.

On peut réaliser le mélange des différentes solutions des réactifs précités selon de nombreuses variantes. Par exemple, on peut faire le mélange sous agitation en ajoutant en continu et par voie séparée la solution de sel de cérium, éventuellement la solution de l'agent oxydant, la solution de sel(s) de terre(s) rare(s), la solution de dérivé(s) oxygéné(s) du silicium et la solution basique. On peut également effectuer le prémélange de la solution de sel de cérium et de la solution de sel(s) de terre(s) rare(s) qui est ajouté en continu au milieu réactionnel en parallèle avec les deux autres solutions. On peut aussi faire le prémélange de la solution de dérivé(s) oxygéné(s) du silicium avec la solution basique. Dans le cas de l'emploi d'un agent oxydant, il est possible de le mettre en œuvre en mélange avec une solution autre que celle de la base, en particulier, en mélange avec la solution de sel de cérium et/ou de la solution de sel(s) de terre(s) rare(s).

Quel que soit l'ordre d'introduction des solutions des réactifs choisi, le mélange s'effectue de manière instantanée: on obtient une concentration dans les diverses espèces présentes bien définie à chaque instant tout au long de la masse réactionnelle. Ceci permet d'obtenir des compositions homogènes, définies et de caractéristiques stables.

La température du milieu réactionnel doit être comprise, de préférence, entre 10 et 95 °C et, plus particulièrement, entre 40 et 70 °C.

Le temps de séjour du mélange dans le milieu réactionnel n'est pas un facteur critique selon l'invention et peut varier dans de larges limites; généralement, on choisira des temps de séjour compris entre 30 minutes et 2 heures.

Selon une autre variante du procédé selon l'invention, la masse réactionnelle peut être mûrie pendant un certain temps à une température comprise entre 10 et 95 °C, et de préférence entre 50 et 80 °C avant l'opération de filtration. Dans ce cas, le temps de mûrissement n'est pas un facteur critique selon l'invention et peut varier dans de larges limites; toutefois, un temps pouvant aller de 30 minutes jusqu'à 2 heures est généralement satisfaisant.

La deuxième étape du procédé de l'invention, consiste à filtrer après réaction la masse réactionnelle qui se présente sous la forme d'une suspension. Cette opération de filtration est effectuée éventuellement en continu à température ambiante c'est-à-dire entre 10 °C et 25 °C: la masse réactionnelle est à une température comprise entre 10 et 90 °C et, de préférence, entre 35 et 45 °C.

Selon une variante du procédé de l'invention, le gâteau de filtration peut être ensuite lavé avec de l'eau ou une solution d'un sel d'ammonium. Après ce lavage, la teneur en eau du gâteau est comprise entre 20 et 80% en poids et, généralement, entre 30 et 50%.

Le produit obtenu après filtration et éventuellement lavage est ensuite séché éventuellement en continu. La température de séchage est comprise de préférence entre 100 et 600 °C, le temps de séchage n'est pas critique et peut varier dans ces conditions, entre 30 minutes et 24 heures.

Le produit sec est ensuite calciné éventuellement en continu à température d'au moins 850 °C mais située de préférence entre 850 et 1050 °C.

La borne supérieure définissant la gamme de température n'est pas critique et peut atteindre des valeurs aussi élevées que 1500 °C.

Par contre, on a constaté de façon surprenante, que la limite inférieure de la température de calcination était critique et devait être au moins égale à 850 °C. Si la température est choisie plus faible, on obtient une composition qui ne possède pas la phase cristallographique $Ln_{2-x}Ce_xSi_2O_7$ qui est responsable des bonnes propriétés de polissage des compositions de l'invention. La durée de la calcination varie entre 30 minutes et 10 heures.

On réalise ensuite le broyage du produit calciné de telle sorte qu'il présente des dimensions d'agrégats allant de 0,2 à 5,0 µm. Généralement la taille des agrégats exprimée par le diamètre moyen varie de 0,5 à 1,5 µm. On définit le diamètre moyen comme étant un diamètre tel que 50% en poids des agrégats ont un diamètre supérieur ou inférieur au diamétre moyen.

Le broyage peut être accompagné d'une opération de sélection granulométrique qui peut être réalisée simultanément ou successivement.

Le procédé de l'invention peut être mis en œuvre dans un appareillage classique. L'étape de mélange des réactifs s'effectue dans un réacteur équipé d'un dispositif de chauffage thermorégulé,

des moyens usuels de contrôle de réaction (thermomètre), des moyens d'agitation (agitation à ancre ou à hélice), des moyens d'introduction des réactifs et d'une unité de régulation du pH placée à la sortie du réacteur.

L'opération de mûrissement est réalisée dans le même type d'appareillage à la différence près qu'il n'est pas équipé des moyens d'introduction des réactifs et de l'unité de régulation du pH. Le passage de la masse réactionnelle d'un réacteur à l'autre, se fait par gravité.

Ensuite la filtration de la suspension obtenue peut être conduite sur un dispositif continu de filtration par exemple, un filtre rotatif type Vernay ou un filtre à bande.

Le gâteau de filtration est introduit à l'aide de tout moyen mécanique approprié (râcle) dans le dispositif de séchage-calcination.

Les opérations de séchage et de calcination peuvent être effectuées dans deux appareils distincts ou s'enchaîner dans un seul appareil du type four rotatif. On utilise de préférence un four rotatif légèrement incliné permettant ainsi la circulation de la matière et assurant dans sa première partie, le séchage du produit et dans sa deuxième partie, sa calcination en raison d'un gradient de température plus élevé dû à la proximité de la flamme que l'on alimentera, de préférence avec un gaz naturel.

Après calcination, la composition obtenue peut être soumise à des opérations de finissage qui consistent à un broyage et à une sélection granulométrique qui peuvent être effectués dans le même appareil, par exemple un ensemble microniseur.

Conformément au procédé de l'invention on obtient des compositions destinées au polissage dont l'analyse chimique globale est la suivante (les pourcentages sont donnés en poids):

– terres rares exprimées en oxydes: de 75 à 95%

– silicium exprimé en dioxyde: de 5 à 25%.

Le pourcentage de dioxyde de cérium par rapport au poids total des oxydes de terres rares varie de 60 à 85%.

Elles présentent une surface spécifique qui varie entre 1 m2/g et 35 m2/g: la surface spécifique est déterminée selon la méthode BRUNAUER - EMMETT - TELLER décrite dans «The Journal of American Society 60, p. 309, Fév. 1938». Pour l'application envisagée, on choisira de préférence une composition ayant une surface spécifique comprise entre 3 et 10 m2/g.

L'examen au microscope électronique à balayage montre que les produits calcinés présentent des blocs de dimensions faibles inférieures à 100 µm qui résultent de l'agglomération de grains, eux-mêmes constitués de particules élémentaires de l'ordre de 0,2 µm.

Les trois éléments Si, Ln, Ce sont répartis de façon homogène au niveau des grains.

Les compositions de l'invention renferment essentiellement deux phases cristallographiques: une phase de type $CeO_2$ à structure cubique et une phase pyrosilicate de terres rares $Ln_{2-x}Ce_xSi_2O_7$ de structure orthorhombique: x est supérieur ou égal à 0 et inférieur à 2, et de préférence, x est supérieur ou égal à 0 et inférieur ou égal à 0,2.

Elles contiennent également en quantités moindres, une phase d'oxydes de terres rares généralement un sesquioxyde $Ln_2O_3$ de structure cubique type fluorine et une phase de dioxyde de silicium $SiO_2$ sous forme vitreuse ou cristallisée sous forme de cristobalite lorsque la température de calcination est supérieure à 950 °C.

Les proportions des différentes phases varient en fonction de la quantité des matières premières mises en œuvre et des conditions de calcination.

Généralement, elles sont les suivantes:

– $CeO_2$: 30 à 80%

– $Ln_{2-x}Ce_xSi_2O_7$: 12 à 60%

– $Ln_2O_3$: 0 à 15%

– $SiO_2$: 1,5 à 8%

Les compositions obtenues selon le procédé de l'invention sont applicables au polissage du verre ou des matières du même genre.

Elles peuvent être utilisées en particulier en optique industrielle, dans le domaine de la lunetterie, série ou production de masse et également en lunetterie de prescription.

Un domaine d'application privilégié desdites compositions est l'industrie du verre qui regroupe la cristallerie, la glacerie, le verre plat notamment vitrage et double-vitrage, les rétroviseurs d'automobile et les écrans de télévision.

La mise en œuvre des compositions de l'invention pour le polissage du verre se fait d'une manière classique. Comme elles interviennent généralement dans un système de polissage à l'arrosé, elles sont mises en suspension dans l'eau.

La confection des bains de polissage est réalisée, simplement, par addition de la composition poudre au milieu aqueux mis sous agitation manuellement ou par des moyens classiques d'agitation (agitation à ancre, à hélice ou à turbine etc. ...)

La quantité de composition introduite est telle que, généralement, la concentration de la composition exprimée en $CeO_2$ varie de 30 à 200 g par litre de bain, de préférence environ 50 g/litre.

La qualité de l'eau intervenant pour la préparation du bain de polissage ne présente aucun caractère critique mais il est préférable pour avoir une bonne tenue en suspension de la composition de l'invention, d'utiliser une eau douce c'est-à-dire une eau présentant une dureté inférieure à 30° TH.

La température du bain est choisie de telle sorte qu'elle soit inférieure à 50 °C. Il est intéressant de travailler à des températures basses de l'ordre de 20 °C car toute élévation de température accélère la décantation de la suspension.

Les compositions de polissage de l'invention s'avèrent présenter de nombreux avantages:

– elles présentent un aspect amélioré: finesse, granulométrie, couleur;

– elles possèdent de bonnes qualités d'homogénéité et de reproductibilité;

– elles ont également des propriétés améliorées: densité et tenue de suspension;

– elles conduisent à des performances améliorées: efficacité polissante, rapidité de polissage, faible taux de rebut des pièces polies, etc. ...

En outre, elles possèdent l'avantage par rapport à celles décrites dans le brevet précité, de ne pas faire intervenir au cours de leur fabrication des ions fluorure.

Enfin, leur emploi est particulièrement avantageux du fait qu'elles peuvent être recyclées dans le verre lorsqu'elles sont usagées et qu'elles ont subi une diminution de leur efficacité polissante. En effet, elles ne possèdent aucun ion susceptible d'interférer avec la composition du verre et peuvent donc servir avantageusement ensuite comme source d'oxyde cérique.

Les exemples qui suivent illustrent l'invention sans toutefois la limiter.

Dans les exemples 1 à 3, on exemplifie des compositions, dans lesquelles le rapport dioxyde de cérium sur oxydes de terres rares reste constant soit 65% et l'on fait varier le rapport équivalents $SiO_3^{=}$/équivalents $Ln^{3+}$: 0,2–0,4–0,6.

Dans les exemples 4 et 5, on prépare des compositions dans lesquelles le rapport dioxyde de cérium sur oxydes de terres rares est de 85% et le rapport équivalents $SiO_3^{=}$/équivalents $Ln^{3+}$ est respectivement de 0,1 et 0,4.

Les produits obtenus sont alors caractérisés selon les méthodes physico-chimiques suivantes:

– analyse chimique:
  – Dosage des oxydes de terres rares: il est effectué après frittage de la composition réalisé par sa calcination en présence de peroxyde de sodium et précipitation par l'acide oxalique après traitement acide, selon la méthode KHOLTOFF.
  – Dosage de $SiO_2$: il est fait selon la méthode de dosage par fluorescence X, après mise en forme de la composition sous forme d'une perle, à l'aide d'un traitement au borax.

– surface spécifique:

Elle est déterminée selon la méthode de BRUNAUER-EMMETT-TELLER citée précédemment.

– densité apparente tassée:

Elle est déterminée conformément à la norme DIN 53 194. Le principe de la méthode est d'introduire une quantité connue du produit en poudre dans une éprouvette graduée et de la soumettre à un tassement dans des conditions déterminées.

– structure cristalline:

Méthode de Debye et Scherrer en transmission: rayonnement monochromatique du molybdène.

Les exemples 6 à 10 correspondent aux exemples d'application des compositions préparées dans les exemples 1 à 5, au polissage du verre dont leur aptitude est révélée par une série de tests.

Exemples 1 à 3

On prépare trois compositions selon le mode opératoire suivant:

a) On introduit respectivement dans trois pots de prémélange, les solutions suivantes:

1) – une solution aqueuse d'ammoniaque 3N

2) – une solution aqueuse contenant du nitrate céreux à raison de 112 g/l exprimés en $CeO_2$ (soit 1,9 équivalent/litre de $Ce^{3+}$) et du nitrate de lanthane à raison de 60 g/l exprimés en $La_2O_3$ (soit 1,1 équivalent/litre de $La^{3+}$)
   – et une solution aqueuse d'eau oxygénée à 200 volumes la proportion d'eau oxygénée par rapport au sel céreux est en excès de 35%

3) – une solution de silicate de sodium de composition $Na_2O$, $4SiO_2$ dont la concentration variant selon les exemples, est précisée dans le tableau I. On introduit aussi la quantité d'ammoniaque correspondante nécessaire pour transformer $SiO_2$ en $SiO_3^{=}$.

Dans un réacteur de 2 litres thermorégulé, équipé d'un système d'agitation et d'une unité de régulation de pH placée à sa sortie, on introduit:

– la solution de nitrates de terres rares à raison de 450 cm3/h
– la solution d'ammoniaque de telle sorte que le pH de la réaction soit régulé à pH 7,7
– la solution de silicate de sodium à raison de 500 cm3/h

Le réacteur fonctionne à 45 – 50 °C, le temps de séjour est de 1 heure.

La masse réactionnelle passe par gravité dans un réacteur similaire où a lieu le mûrissement à une température de 70 °C pendant un temps de séjour de 1 heure.

b) On filtre la masse réactionnelle à température ambiante sur filtre Büchner.

c) On effectue ensuite le séchage du précipité obtenu dans une étuve à une température de 120 °C pendant 16 heures puis on effectue la calcination dans un four à moufle, pendant 2 heures à une température qui sera mentionnée dans le tableau I.

Tableau I

| Ex. | Rapport $CeO_2$ / $CeO_2+La_2O_3$ | Rapport équivalents $SiO_3^{=}$ / équivalents $Ln^{3+}$ | Température de calcination °C | Analyse chimique: Oxydes de terres rares | Analyse chimique: $SiO_2$ total | Surface spécifique m2/g | Densité apparente tassée |
|---|---|---|---|---|---|---|---|
| 1 | 65 | 0,2 | 1050 | 90,7 | 9,5 | 9 | 1,2 |
| 2 | 65 | 0,4 | 950 | 82,9 | 17,6 | 4,2 | 1,35 |
| 3 | 65 | 0,6 | 950 | 76,4 | 24,7 | 3,6 | 1,45 |

d) On obtient un produit fini avec un rendement supérieur à 95%. On élimine les grosses particules par passage sur tamis AFNOR ayant une ouverture de mailles de 40 µm.

Les produits obtenus sont ensuite caractérisés.

Les résultats obtenus sont consignés dans le tableau I.

L'examen au microscope électronique à balayage montre que les compositions des exemples 1 à 3 présentent des blocs de dimensions faibles, inférieures à 100 µm qui résultent de l'agglomération de particules élémentaires de l'ordre de 0,2 µm dont certaines commencent à coalescer vers 950 °C – 1000 °C.

L'examen par sonde X montre que les trois éléments Si, La, Ce sont répartis de façon sensiblement homogène: on ne met pas en évidence des grains de silice seule ou des grains sans silice.

Les compositions préparées selon les exemples 1 à 3 sont analysées par diffraction des rayons X.

Les phases observées sont les suivantes:

- composition de l'exemple 1:
  $La_2O_3$ monoclinique (faible) + $CeO_2$ (fort) + $Ln_2Si_2O_7$ (faible)
- composition de l'exemple 2:
  $SiO_2$ cristobalite (faible) + $CeO_2$ (fort) + $Ln_2Si_2O_7$ (moyen)
- composition de l'exemple 3:
  $SiO_2$ cristobalite (moyen) + $CeO_2$ (fort) + $Ln_2Si_2O_7$ (moyen).

Les paramètres de la phase $Ln_2Si_2O_7$ sont:

| | a ± 0,01 Å | b ± 0,01 Å | c ± 0,01 Å |
|---|---|---|---|
| Exemple 1 | 8,80 | 13,20 | 5,40 |
| Exemple 2 | 8,80 | 13,21 | 5,39 |
| Exemple 3 | 8,80 | 13,21 | 5,40 |

Les paramètres de la phase $Ln_2Si_2O_7$ sont les mêmes à la précision des mesures effectuées.

Les paramètres et l'intensité de la structure type $CeO_2$ sont les suivants:

| | a ± 0,01 Å | taux de cristallisation* |
|---|---|---|
| Exemple 1 | 5,44 | |
| Exemple 2 | 5,42 | ≃ 55 |
| Exemple 3 | 5,42 | ≃ 53 |

(*) taux calculé après correction des coefficients d'absorption.

Les paramètres connus des phases $La_2Si_2O_7$ et $Ce_2Si_2O_7$ sont donnés ci-après:

| | a ± 0,01 Å | b ± 0,01 Å | c ± 0,01 Å |
|---|---|---|---|
| phase $La_2Si_2O_7$ | 8,794 | 13,201 | 5,409 |
| phase $Ce_2Si_2O_7$ | 8,722 | 13,056 | 5,401 |

Le paramètre de maille du dioxyde de cérium seul est de 5,411 Å (JCPDS 4.0593).

Une forte valeur du paramètre de la structure type $CeO_2$ correspond à une insertion du lanthane dans la structure $CeO_2$.

On note que la présence de la silice facilite la migration du lanthane hors de la structure $CeO_2$: dans l'exemple 1 où il y a peu de silice, le paramètre $CeO_2$ est dilaté 5,44 Å (au lieu de 5,411 Å) malgré une calcination de la composition à 1050 °C.

Au fur et à mesure que la phase pyrosilicate apparaît, le paramètre de la maille type $CeO_2$ se rapproche de celle du dioxyde de cérium seul. Au cours de la calcination, il y a ségrégation à une échelle microscopique (< 1000 Å) entre le lanthane et le cérium.

Dans les compositions des exemples 2 et 3, le cérium est essentiellement sous une forme proche de $La_2Si_2O_7$ et l'excès de silice se retrouve sous forme de cristobalite ou de silice vitreuse.

Compte-tenu des paramètres des phases observées dans les compositions de l'invention et des paramètres des phases $La_2Si_2O_7$ et $Ce_2Si_2O_7$, on peut déduire que la phase pyrosilicate de lanthane répond à la formule $La_{2-x}Ce_xSi_2O_7$ dans laquelle x est inférieur à 0,2.

Exemples 4 et 5

On reproduit le mode opératoire de l'exemple précédent à la différence près que l'on introduit une solution aqueuse contenant du nitrate céreux à raison de 146 g/l exprimés en $CeO_2$ (soit 2,6 équivalents/litre de $Ce^{3+}$) et du nitrate de lanthane à raison de 26 g/l exprimés en $La_2O_3$ (soit 0,5 équivalent/litre de $La^{3+}$).

La concentration de la solution de silicate de sodium est telle que l'on ait dans les exemples 4 et 5, un rapport équivalents $SiO_3^{=}$/équivalents $Ln^{3+}$, respectivement de 0,1 et 0,4.

Les caractéristiques des produits obtenus sont rassemblées dans le tableau II.

Tableau II

| Ex. | Rapport $CeO_2$ / $CeO_2 + La_2O_3$ | Rapport équivalents $SiO_3^{=}$ / équivalents $Ln^{3+}$ | Température de calcination °C | Analyse chimique: Oxydes de terres rares | Analyse chimique: $SiO_2$ total | Surface spécifique m2/g | Densité apparente tassée |
|---|---|---|---|---|---|---|---|
| 4 | 85 | 0,1 | 1050 | 95,2 | 4,8 | 9 | 1,3 |
| 5 | 85 | 0,4 | 980 | 83,4 | 17,6 | 5,3 | 1,4 |

Exemples 6 à 10

Ils correspondent à l'illustration de l'application des compositions de l'invention décrites dans les exemples 1 à 5, au polissage du verre.

Afin de juger de leur comportement, au cours de l'opération de polissage du verre, on les soumet à un ensemble de tests suivants:

a) Tenue en suspension

Dans une éprouvette de 250 cm3, on introduit la suspension de la composition à tester à raison de 50 g/l soit 12,5 g de poudre dans 250 cm3 d'eau ayant une dureté de 28° TH et une température de 20 °C. Après homogénéisation complète de la suspension, on suit la vitesse de décantation à l'aide d'un densimètre (graduation de 1000 à 1100) en fonction du temps. On peut tracer la courbe $d = f(t)$.

Le $T_{50}$ est l'expression chiffrée du comportement du produit quant à sa faculté de tenir en suspension. C'est le temps, exprimé en minutes, décimales au bout duquel la valeur mesurée est la moyenne entre la densité initiale et la densité finale de la liqueur claire.

b) Indice de caking

Bien que leurs effets soient similaires tant dans leur déroulement que dans les inconvénients qu'ils apportent, il convient de dissocier le compactage du caking. Le compactage s'entend pour du produit frais. Le caking, en revanche, apparaît dans les machines, en cours ou après que le produit ait travaillé.

Dans le cas d'un polissage sous conditions dures (grande vitesse, fortes pressions) la composition de polissage subit une usure mécanique notable: cassage des agglomérats, glissement de la granulométrie vers les fines. La suspension s'enrichit d'autre part en particules exogènes (silicates provenant du verre enlevé). La conjugaison de ces deux facteurs fait que, lorsqu'en fin de journée ou en fin de semaine, comme c'est souvent le cas, les machines sont arrêtées, le produit décante dans les réservoirs et tuyauteries sous forme d'une boue consistante et collante. Il y a formation de caking. La remise en suspension au redémarrage est alors malaisée, ou, dans le pire des cas, impossible.

Pour déterminer l'indice de caking, on recueille dans un bécher inox, la suspension ayant servi à la mise en forme du polissoir (cf. test suivant). Après un repos de 24 heures entraînant la décantation, on procède par une agitation mécanique contrôlée (250 t/mn, 5 mn) à la remise en suspension du produit. Le surnageant est alors jeté, puis le bécher mis à l'étuve pour séchage de la fraction non remise en suspension. L'indice de caking (IC) est le pourcentage que représente cette fraction, par rapport à la quantité de composition mise en œuvre au départ.

c) Le compactage initial

Cette notion découle chronologiquement de la tenue en suspension. En effet, que le produit soit assisté ou non, il finit toujours par décanter. Les utilisateurs préparent souvent leur suspension à l'avance, à la concentration désirée, et la stockent en attendant sa mise en service sur les machines. Un laps de temps, pouvant atteindre plusieurs jours, s'écoule entre la préparation de la suspension et son utilisation, temps pendant lequel il y a décantation. Se produisent alors deux cas de figures:

– ou le décantat forme une couche expansée, impalpable;

– ou bien la partie qui repose au fond du réservoir revêt un aspect boueux, collant, voire même celui d'un véritable béton.

La remise en suspension du produit est instantanée et complète dans le premier cas, et la concentration programmée est retrouvée.

S'il y a, par contre, compactage du produit comme dans le deuxième cas, une partie seulement du produit se remet en suspension, entraînant un appauvrissement du bain en composition de polissage. Dans des cas extrêmes, le compactage atteint des proportions telles qu'il est impossible de décoller le produit du fond du réservoir. Il s'ensuit une perte importante de produit neuf devenu inutilisable.

Pour apprécier la tendance ou non au compactage, on réalise le test suivant qui consiste à préparer dans un seau, 5 litres de suspension bien homogénéisée par dispersion de 100 g de composition à tester par litre d'eau de ville. Au bout de 24 heures, on «évalue manuellement» l'état de la partie décantée. Deux autres déterminations sont faites à 48 et 72 heures. Faute de pouvoir chiffrer une sensation tactile, on évalue l'importance du compactage suivant le barème suivant: pas de compactage, compactage léger, compactage.

d) Efficacité polissante

Le test est conduit avec différents types de polissoir: mousse de polyuréthane, feutre et Pellon.

– efficacité sur mousse de polyuréthane.

On utilise une machine industrielle CMV modèle ICM 7 équipée de deux broches et d'une tête de polissage convexe. Une pompe alimente la surface de verre à polir à l'aide de la suspension de la composition de polissage à tester.

Les conditions opératoires sont les suivantes:

| | |
|---|---|
| – vitesse de la tête | 1500 tours/mn |
| – vitesse des broches | 1000 tours/mn |
| – pression | 1200 g/cm2 |
| – concentration de la suspension | 50 g/l |
| – dureté de l'eau | 28° TH |
| – température | 20 °C |
| – polissoir | en mousse de polyuréthane MPU LP 46 (épaisseur 1,3 mm) |
| – verre à polir | Crown blanc |
| diamètre ... | 55 mm |
| – débit de la pompe | 3,8 à 4 l/mn |
| – durée de l'essai | 3 mn |
| – durée totale du test | 60 mn |

Les faces concaves des deux éprouvettes de verre sont travaillées ensemble pendant 3 minutes au bout desquelles l'enlèvement de matière

est déterminé par pesée. On répète l'essai sur une durée de 1 heure.

Le poids moyen enlevé est ramené à:
- unité de poids: le mg
- unité de surface: le dm2
- unité de temps: la mn

On trace la courbe d'efficacité polissante en fonction du temps de travail.

A partir de cette courbe, on exprime l'efficacité polissante comme la moyenne des 10 premiers résultats.

- efficacité sur feutre

On conduit les essais sur une machine COBURN 603 à une seule broche et dont le polissoir en feutre est arrosé uniformément par la composition à tester.

Les conditions opératoires sont les suivantes:

| | |
|---|---|
| - vitesse du polissoir | 550 tours/mn |
| - vitesse de la broche | identique car la broche est entrainée par le polissoir |
| - pression | 250 g/cm2 |
| - concentration de la suspension | 50 g/l |
| - dureté de l'eau | 28° TH |
| - température | 20 °C |
| - polissoir | en feutre (type Blu-Streak) |
| - verre à polir | Crown blanc |
| - débit de la turbine | 1,2 à 1,4 l/mn |
| - durée de l'essai | 15 mn |
| - durée totale du test | 1 h 30 |

L'expression de l'efficacité polissante est en tout point identique à celle décrite précédemment pour la machine CMV.

On détermine l'efficacité polissante au plateau d'efficacité c'est à-dire la moyenne des essais de 45 mn à 1 h 30.

- efficacité sur Pellon

On effectue le test sur la machine COBURN précitée. Le polissoir utilisé est un Pellon autoadhésif fabriqué par la Société HARTFELT et collé sur un outil plan.

Les conditions opératoires sont les suivantes:

| | |
|---|---|
| - vitesse du polissoir | 550 tours/mn |
| - vitesse de la broche | identique car la broche est entraînée par le polissoir |
| - pression | 250 g/cm2 |
| - concentration de la suspension | 50 g/l |
| - dureté de l'eau | 28° TH |
| - température | 20 °C |
| - polissoir | Pellon |
| - verre à polir | Crown blanc |
| - débit de la turbine | 1,2 à 1,4 l/mn |
| - durée de l'essai | 15 mn |
| - durée totale du test | 3 h. |

On détermine l'efficacité polissante en effectuant la moyenne des efficacités obtenues à 30, 45 et 60 minutes.

Les compositions de polissage de l'invention soumis aux tests décrits ci-dessus ont conduit aux résultats qui sont rassemblés dans le tableau III.

Afin de comparer les caractéristiques des compositions de polissage et d'en apprécier les performances, on donne le profil d'une composition de polissage classique qui est sur le marché sous la dénomination Cérox 1650 qui a la composition suivante:

| | |
|---|---|
| - oxydes de terres rares | 94% |
| - oxyde cérique | 66% |
| - oxyde de lanthane | 19% |
| - oxyde de néodyme | 9% |
| - oxyde de praséodyme | < 0,0001% |
| - fluorure exprimé en $F^-$ | 4% |
| - phosphate exprimé en $P_2O_5$ | 4% |

- densité apparente tassée
  - $d_A = 1,6 + 0,2$
- tenue en suspension
  - $T_{50}$ = 3 minutes
- compactage initial
  - pas de compactage
- indice de caking
  - IC = 40%
- efficacité polissante
  - efficacité sur mousse de polyuréthane 370 mg/dm2/mn
  - efficacité sur feutre 38 mg/dm2/mn
  - efficacité sur Pellon 44 mg/dm2/mn

Les compositions de l'invention conduisent à des résultats aussi bons, voire même supérieurs, à ceux du produit de l'art antérieur, tout en présentant le gros avantage de ne pas faire intervenir dans leur composition chimique, l'anion fluorure dont la présence pose toujours des problèmes, au niveau de la fabrication.

Tableau III

| | Ex. 6 | Ex. 7 | Ex. 8 | Ex. 9 | Ex. 10 |
|---|---|---|---|---|---|
| Tenue en suspension T 50 en mn | 5 | 4,7 | 4,7 | 3 | 7,5 |
| Indice de caking en % | 9,0 | 3,0 | 2,0 | 1,0 | 3,0 |
| Compactage | non | non | non | léger | non |
| Efficacité de polissage en mg/dm2/mn | | | | | |
| M.P.U | 260 | 360 | 350 | 360 | 370 |
| Feutre | 39 | 40 | 40 | 47 | 41 |
| Pellon | 52 | 53 | 45 | 56 | 53 |

## Revendications

1. Composition de polissage à base de cérium comprenant au moins une phase cristallographique de type $CeO_2$ et une phase cristallographique constituée par un pyrosilicate de terres rares répondant à la formule $Ln_{2-x}Ce_xSi_2O_7$ dans laquelle Ln représente au moins un élément pris dans le groupe constitué par les lanthanides et l'yttrium et dans laquelle x est supérieur ou égal à 0 et inférieur à 2.

2. Composition selon la revendication 1 caractérisée par le fait que x est supérieur ou égal à 0 et inférieur ou égal à 0,2.

3. Composition selon l'une des revendications 1 et 2 caractérisée par le fait que Ln représente le lanthane ou le néodyme.

4. Composition selon l'une des revendications 1 à 3 caractérisée par le fait qu'elle comprend en outre, une phase d'oxydes de terres rares et une phase de dioxyde de silicium sous forme vitreuse ou cristallisée.

5. Composition selon l'une des revendications 1 à 4 caractérisée par le fait qu'elle a la composition suivante:

| | |
|---|---|
| – $CeO_2$: | 30 à 80% |
| – $Ln_{2-x}Ce_xSi_2O_7$: | 12 à 60% |
| – $Ln_2O_3$: | 0 à 15% |
| – $SiO_2$: | 1,5 à 8% |

6. Composition selon l'une des revendications 1 à 5 caractérisée par le fait qu'elle présente une surface spécifique variant entre 1 et 35 $m^2/g$.

7. Composition selon la revendication 6 caractérisée par le fait qu'elle présente une surface spécifique comprise entre 3 et 10 $m^2/g$.

8. Composition selon l'une des revendications 1 à 7 caractérisée par le fait qu'elle présente des dimensions d'agrégats allant de 0,2 à 5,0 µm.

9. Composition selon la revendication 8 caractérisée par le fait qu'elle présente des agrégats ayant un diamètre moyen variant entre 0,5 et 1,5 µm.

10. Composition selon l'une des revendications 1 à 9 caractérisée par le fait qu'elle renferme de 75 à 95% de terres rares exprimées en oxydes et de 5 à 25% de silicium exprimé en dioxyde de silicium et que le pourcentage de dioxyde de cérium représente de 60 à 85% du poids total des oxydes de terres rares.

11. Procédé de préparation de la composition de polissage décrite dans l'une des revendications 1 à 10 caractérisé par le fait qu'il consiste:

– à mélanger simultanément, une solution de sel de cérium, une solution basique, une solution aqueuse de sel d'au moins une terre rare trivalente ou d'yttrium et une solution d'au moins un dérivé oxygéné du silicium susceptible de former des composés insolubles de terres rares,

– à filtrer le précipité obtenu,

– à le sécher et à le calciner à une température supérieure à 850 °C.

12. Procédé selon la revendication 11, caractérisé par le fait que la solution de sel de cérium est une solution aqueuse de chlorure céreux, de nitrate céreux, de nitrate cérique ou de leur mélange.

13. Procédé selon l'une des revendications 11 et 12, caractérisé par le fait que la concentration de la solution de sel de cérium est comprise entre 0,2 et 4 moles par litre.

14. Procédé selon la revendication 13, caractérisé par le fait que la concentration de la solution de sel de cérium est comprise entre 0,5 et 2 moles par litre.

15. Procédé selon l'une des revendications 11 à 14, caractérisé par le fait que l'on introduit le cérium dans le milieu réactionnel à l'état céreux et on l'oxyde à l'état cérique en ajoutant en continu au milieu réactionnel, soit isolément, soit en mélange avec une solution autre que celle contenant la base, un agent oxydant.

16. Procédé selon la revendication 15, caractérisé par le fait que la solution de l'agent oxydant est choisie parmi le groupe comportant des solutions de perchlorate, chlorate, d'hypochlorite, de persulfate de sodium, de potassium ou d'ammonium; d'eau oxygénée; l'air, l'oxygène, l'ozone ou l'oxydation électrochimique.

17. Procédé selon l'une des revendications 15 et 16, caractérisé par le fait que la proportion d'agent oxydant par rapport au sel céreux est en excès d'environ 10 à 40% par rapport à la stœchiométrie.

18. Procédé selon l'une des revendications 11 à 17 caractérisé par le fait que l'on ajoute une base, en continu au milieu réactionnel, soit isolément, soit en mélange avec la solution d'au moins un dérivé oxygéné du silicium.

19. Procédé selon la revendication 11, caractérisé par le fait que la solution basique est une solution aqueuse d'ammoniaque, d'hydroxyde de sodium, d'hydroxyde de potassium.

20. Procédé selon la revendication 19, caractérisé par le fait que l'on met en œuvre un excès supérieur à environ 5% d'équivalents basiques par rapport aux équivalents cérium.

21. Procédé selon l'une des revendications 19 et 20, caractérisé par le fait que le pH du milieu réactionnel est compris entre 5 et 10.

22. Procédé selon la revendication 21, caractérisé par le fait que le pH du milieu réactionnel est compris entre 7 et 9.

23. Procédé selon l'une des revendications 19 à 22, caractérisé par le fait que le pH du milieu réactionnel est réglé dans ces limites à une valeur constante à $\pm 0,1$ unité de pH.

24. Procédé selon l'une des revendications 11 à 23 caractérisé par le fait que l'on introduit dans le milieu réactionnel en continu, soit isolément, soit en mélange avec la solution de sel de cérium, la solution aqueuse de sel d'au moins une terre rare trivalente choisie dans le groupe constitué par les lanthanides et l'yttrium.

25. Procédé selon la revendication 24 caractérisé par le fait que la solution aqueuse de sel d'au moins une terre rare trivalente est choisie parmi le groupe constitué par les chlorures ou les nitrates de lanthane, cérium, praséodyme, néodyme, samarium, europium, gadolinium, terbium, dysprosium, holmium, erbium, thulium, ytterbium, lutétium et d'yttrium.

26. Procédé selon la revendication 25 caractérisé par le fait que la solution aqueuse d'au moins une terre rare trivalente est une solution de sel de lanthane ou de néodyme.

27. Procédé selon l'une des revendications 24 à 26 caractérisé par le fait que la concentration de la solution aqueuse d'un ou des sels de terres rares trivalentes est comprise entre 0,2 et 1 mole par litre.

28. Procédé selon l'une des revendications 11 à 27 caractérisé par le fait que la proportion entre la solution de sel de cérium et la solution aqueuse d'un ou des sels de terres rares trivalentes est telle que le rapport entre le dioxyde de cérium et les oxydes de terres rares varie entre 60 et 85%.

29. Procédé selon l'une des revendications 11 à 28 caractérisé par le fait que l'on ajoute en continu au milieu réactionnel soit isolément, soit en mélange avec la solution basique, une solution d'au moins un dérivé oxygéné du silicium susceptible de former des composés insolubles de terres rares.

30. Procédé selon la revendication 29 caractérisé par le fait que le dérivé oxygéné du silicium est le dioxyde de silicium, l'acide silicique et les silicates de métaux alcalins.

31. Procédé selon la revendication 30 caractérisé par le fait que le dérivé oxygéné du silicium est le silicate de sodium $Na_2O$, $4SiO_2$.

32. Procédé selon l'une des revendications 29 à 31 caractérisé par le fait que la concentration de la solution d'un ou des dérivés oxygénés du silicium est de 0,1 à 2,0 moles/litre de $SiO_2$.

33. Procédé selon l'une des revendications 11 à 32 caractérisé par le fait que la proportion entre la solution d'au moins un dérivé oxygéné du silicium et la solution d'au moins un sel de terre rare trivalente est telle que le rapport entre les équivalents silicate ($SiO_3^{=}$) et les équivalents terre(s) rare(s) trivalente(s) se situe entre 0,1 et 1,0.

34. Procédé selon la revendication 33 caractérisé par le fait que le rapport entre les équivalents silicate ($SiO_3^{=}$) et les équivalents terre(s) rare(s) trivalente(s) se situe entre 0,2 et 0,6.

35. Procédé selon l'une des revendications 11 à 34, caractérisé par le fait que la température du milieu réactionnel est comprise entre 10 et 95 °C.

36. Procédé selon la revendication 35, caractérisé par le fait que la température du milieu réactionnel est comprise entre 40 et 70 °C.

37. Procédé selon l'une des revendications 11 à 36, caractérisé par le fait que le temps de séjour du mélange dans le milieu réactionnel est compris entre environ 30 minutes et 2 heures.

38. Procédé selon l'une des revendications 11 à 37, caractérisé par le fait que l'on opère le mûrissement de la masse réactionnelle avant l'opération de filtration à une température comprise entre 10 et 95 °C pendant un temps pouvant aller de 30 minutes à 2 heures.

39. Procédé selon la revendication 38, caractérisé par le fait que la température de mûrissement est comprise entre 50 et 80 °C.

40. Procédé selon l'une des revendications 11 à 39, caractérisé par le fait que l'on effectue éventuellement un lavage du gâteau de filtration avec de l'eau.

41. Procédé selon l'une des revendications 11 à 40, caractérisé par le fait que l'on effectue l'étape de séchage éventuellement en continu à une température comprise entre environ 100 et 600 °C pendant une durée d'environ 30 minutes à 24 heures.

42. Procédé selon l'une des revendications 11 à 41, caractérisé par le fait que l'on effectue l'étape de calcination, éventuellement en continu, à une température comprise entre 850 °C et 1500 °C pendant une durée d'environ 30 minutes à 10 heures.

43. Procédé selon la revendication 42 caractérisé par le fait que la température de calcination est comprise entre 850 °C et 1050 °C.

44. Procédé selon l'une des revendications 11 à 43 caractérisé par le fait que l'on opère en outre après l'étape de calcination un broyage et une sélection granulométrique.

45. Utilisation pour le polissage du verre de la composition de polissage décrite selon l'une des revendications 1 à 10.

46. Utilisation de la composition de polissage selon l'une des revendications 1 à 10 comme agent de polissage en optique industrielle, dans le domaine de la lunetterie et dans l'industrie du verre.

47. Utilisation de la composition de polissage selon l'une des revendications 1 à 10 dans le domaine de la lunetterie série ou production de masse et de la lunetterie de prescription.

48. Utilisation de la composition de polissage selon l'une des revendications 1 à 10 dans l'industrie du verre.

49. Utilisation selon l'une des revendications 45 à 48 caractérisée par le fait que la concentration de la composition de polissage exprimée en $CeO_2$ varie de 30 à 200 g par litre de bain.

50. Utilisation de la composition de polissage selon l'une des revendications 1 à 10 après usage comme source d'oxyde cérique pour la décoloration chimique du verre.

**Claims**

1. Polishing composition based on cerium, comprising at least one crystallographic phase of the $CeO_2$ type and one crystallographic phase consisting of a rare earth pyrosilicate corresponding to the formula $Ln_{2-x}Ce_xSi_2O_7$, in which Ln represents at least one element taken from the group comprising the lanthanides and yttrium and in which x is greater than or equal to 0 and less than 2.

2. Composition according to Claim 1, characterized in that x is greater than or equal to 0 and less than or equal to 0.2.

3. Composition according to one of Claims 1 and 2, characterized in that Ln represents lanthanum or neodymium.

4. Composition according to one of Claims 1 to 3, characterized in that it also comprises a phase of rare earth oxides and a phase of silicon dioxide in vitreous or crystallized form.

5. Composition according to one of Claims 1 to 4, characterized in that it has the following composition:

| | |
|---|---|
| – $CeO_2$: | 30 to 80% |
| – $Ln_{2-x}Ce_xSi_2O_7$: | 12 to 60% |
| – $Ln_2O_3$: | 0 to 15% |
| – $SiO_2$: | 1.5 to 8% |

6. Composition according to one of Claims 1 to 5 characterized in that it has a specific surface area varying between 1 and 35 $m^2/g$.

7. Composition according to Claim 6, characterized in that it has a specific surface area of between 3 and 10 $m^2/g$.

8. Composition according to one of Claims 1 to 7, characterized in that it has aggregate sizes ranging from 0.2 to 5.0 μm.

9. Composition according to Claim 8, characterized in that it has aggregates having a mean diameter varying between 0.5 and 1.5 μm.

10. Composition according to one of Claims 1 to 9, characterized in that it contains from 75 to 95% of rare earths, expressed as oxides, and from 5 to 25% of silicon, expressed as silicon dioxide, and in that the percentage of cerium dioxide represents from 60 to 85% of the total weight of the rare earth oxides.

11. Process for the preparation of the polishing composition described in one of Claims 1 to 10, characterized in that it consists:

– in simultaneously mixing a solution of a cerium salt, a basic solution, an aqueous solution of a salt of at least one trivalent rare earth or yttrium, and a solution of at least one oxygen derivative of silicon which is capable of forming insoluble compounds with rare earths,

– in filtering off the precipitate obtained,

– in drying it and in calcining it at a temperature above 850 °C.

12. Process according to Claim 11, characterized in that the solution of cerium salt is an aqueous solution of cerous chloride, cerous nitrate, ceric nitrate or a mixture thereof.

13. Process according to one of Claims 11 and 12, characterized in that the concentration of the solution of cerium salt is between 0.2 and 4 mol per litre.

14. Process according to Claim 13, characterized in that the concentration of the solution of cerium salt is between 0.5 and 2 mol per litre.

15. Process according to one of Claims 11 to 14, characterized in that the cerium is introduced into the reaction medium in the cerous state and it is oxidized to the ceric state by the continuous addition of an oxidizing agent to the reaction medium, either in isolation or as a mixture with a solution other than that containing the base.

16. Process according to Claim 15, characterized in that the solution of the oxidizing agent is chosen from the group comprising solutions of sodium, potassium or ammonium perchlorate, chlorate, hypochlorite or persulphate, hydrogen peroxide solution, air, oxygen, ozone or electrochemical oxidation.

17. Process according to one of Claims 15 and 16, characterized in that the proportion of oxidizing agent relative to the cerous salt is in an excess of about 10 to 40%, compared with the stoichiometric quantitiy.

18. Process according to one of Claims 11 to 17, characterized in that a base is added continuously to the reaction medium, either in isolation or as a mixture with the solution of at least one oxygen derivative of silicon.

19. Process according to Claim 11, characterized in that the basic solution is an aqueous solution of ammonia, sodium hydroxide or potassium hydroxide.

20. Process according to Claim 19, characterized in that an excess of more than about 5% of equivalents of base is used, relative to the equivalents of cerium.

21. Process according to one of Claims 19 to 20, characterized in that the pH of the reaction medium is between 5 and 10.

22. Process according to Claim 21, characterized in that the pH of the reaction medium is between 7 and 9.

23. Process according to one of Claims 19 to 22, characterized in that the pH of the reaction medium is adjusted within these limits to a value which is constant to $\pm$ 0.1 pH unit.

24. Process according to one of Claims 11 to 23, characterized in that the aqueous solution of a salt of at least one trivalent rare earth chosen from the group comprising the lanthanides and yttrium is introduced continuously into the reaction medium, either in isolation or as a mixture with the solution of cerium salt.

25. Process according to Claim 24, characterized in that the aqueous solution of a salt of at least one trivalent rare earth is chosen from the group comprising the chlorides or the nitrates of lanthanum, cerium, praseodymium, neodymium, samarium, europium, gadolinium, terbium, dysprosium, holmium, erbium, thulium, ytterbium, lutecium and yttrium.

26. Process according to Claim 25, characterized in that the aqueous solution of at least one trivalent rare earth is a solution of a salt of lanthanum or neodymium.

27. Process according to one of Claims 24 to 26, characterized in that the concentration of the aqueous solution of trivalent rare earth salt or salts is between 0.2 and 1 mol per litre.

28. Process according to one of Claims 11 to 27, characterized in that the proportion of the solution of cerium salt to the aqueous solution of trivalent rare earth salt or salts is such that the ratio of the cerium dioxide to the rare earth oxides varies between 60 and 85%.

29. Process according to one of Claims 11 to 28, characterized in that a solution of at least one oxygen derivative of silicon which is capable of forming insoluble compounds with rare earths is added continuously to the reaction medium, either in isolation or as a mixture with the basic solution.

30. Process according to Claim 29, characterized in that the oxygen derivative of silicon is silicon dioxide, silicic acid or alkali metal silicates.

31. Process according to Claim 30, characterized in that the oxygen derivative of silicon is the sodium silicate $Na_2O.4SiO_2$.

32. Process according to one of Claims 29 to 31, characterized in that the concentration of the solution of oxygen derivative or derivatives of silicon is 0.1 to 2.0 mol/litre of $SiO_2$.

33. Process according to one of Claims 11 to 32, characterized in that the proportion of the solution of at least one oxygen derivative of silicon to the solution of at least one trivalent rare earth salt is such that the ratio of the equivalents of silicate ($SiO_3^=$) to the equivalents of trivalent rare earth(s) is between 0.1 and 1.0.

34. Process according to Claim 33, characterized in that the ratio of the equivalents of silicate ($SiO_3^=$) to the equivalents of trivalent rare earth(s) is between 0.2 and 0.6.

35. Process according to one of Claims 11 to 34, characterized in that the temperature of the reaction medium is between 10 and 95 °C.

36. Process according to Claim 35, characterized in that the temperature of the reaction medium is between 40 and 70 °C.

37. Process according to one of Claims 11 to 36, characterized in that the residence time of the mixture in the reaction medium is between about 30 minutes and 2 hours.

38. Process according to one of Claims 11 to 37, characterized in that the reaction mixture is aged, before the filtration operation, at a temperature of between 10 and 95 °C for a time which can range from 30 minutes to 2 hours.

39. Process according to Claim 38, characterized in that the ageing temperature is between 50 and 80 °C.

40. Process according to one of Claims 11 to 39, characterized in that the filter cake is optionally washed with water.

41. Process according to one of Claims 11 to 40, characterized in that the drying step is optionally carried out continuously, at a temperature of between about 100 and 600 °C for a period of about 30 minutes to 24 hours.

42. Process according to one of Claims 11 to 41, characterized in that the calcination step is optionally carried out continuously, at a temperature of between 850 °C and 1500 °C for a period of about 30 minutes to 10 hours.

43. Process according to Claim 42, characterized in that the calcination temperature is between 850 °C and 1050 °C.

44. Process according to one of Claims 11 to 43, characterized in that grinding and particle size selection are also carried out after the calcination step.

45. Use of the polishing composition described according to one of Claims 1 to 10 for the polishing of glass.

46. Use of the polishing composition according to one of Claims 1 to 10 as a polishing agent in industrial optics, in the field of the spectacle industry and in the glass industry.

47. Use of the polishing composition according to one of Claims 1 to 10 in the field of the series or mass production of spectacles or in the field of prescription spectacles.

48. Use of the polishing composition according to one of Claims 1 to 10 in the glass industry.

49. Use according to one of Claims 45 to 48, characterized in that the concentration of the polishing composition expressed as $CeO_2$ varies from 30 to 200 g per litre of bath.

50. Use of the polishing composition according to one of Claims 1 to 10 after use as a source of ceric oxide for the chemical decolorization of glass.

**Patentansprüche**

1. Poliermittelzusammensetzung auf Cerbasis umfassend wenigstens eine kristallografische Phase vom $CeO_2$-Typ und eine kristallografische Phase bestehend aus einem Pyrosilikat der Seltenen Erden entsprechend der Formel

$$Ln_{2-x}Ce_xSi_2O_7$$

in der Ln wenigstens ein Element aus der Gruppe bestehend aus den Lanthaniden und Yttrium darstellt und in der x grösser oder gleich 0 und kleiner als 2 ist.

2. Zusammensetzung nach Anspruch 1, dadurch gekennzeichnet, dass x grösser oder gleich 0 und kleiner oder gleich 0,2 ist.

3. Zusammensetzung nach einem der Ansprüche 1 oder 2, dadurch gekennzeichnet, dass Ln Lanthan oder Neodym darstellt.

4. Zusammensetzung gemäss einem der Ansprüche 1 bis 3, dadurch gekennzeichnet, dass sie ausserdem eine Phase von Oxiden der Seltenen Erden und eine Siliziumdioxydphase in glasartiger oder kristalliner Form enthält.

5. Zusammensetzung nach einem der Ansprüche 1 bis 4, dadurch gekennzeichnet, dass sie die nachfolgende Zusammensetzung aufweist:

| | |
|---|---|
| $CeO_2$: | 30 bis 80% |
| $Ln_{2-x}Ce_xSi_2O_7$: | 12 bis 60% |
| $Ln_2O_3$: | 0 bis 15% |
| $SiO_2$: | 1,5 bis 8% |

6. Zusammensetzung nach einem der Ansprüche 1 bis 5, dadurch gekennzeichnet, dass sie eine spezifische Oberfläche aufweist, die zwischen 1 und 35 $m^2/g$ variiert.

7. Zusammensetzung nach Anspruch 6, dadurch gekennzeichnet, dass sie eine spezifische Oberfläche von 3 bis 10 $m^2/g$ aufweist.

8. Zusammensetzung nach einem der Ansprüche 1 bis 7, dadurch gekennzeichnet, dass sie Aggregatdimensionen aufweist, die von 0,2 bis 5,0 µm reichen.

9. Zusammensetzung nach Anspruch 8, dadurch gekennzeichnet, dass sie Aggregate aufweist, die einen mittleren Durchmesser variierend von 0,5 bis 1,5 µm haben.

10. Zusammensetzung nach einem der Ansprüche 1 bis 9, dadurch gekennzeichnet, dass sie 75 bis 95% Seltene Erden ausgedrückt als Oxyde und 5 bis 25% Silizium ausgedrückt als Siliziumdioxyd enthält und dass der Prozentanteil an Cerdioxyd 60 bis 85% des Gesamtgewichts der Oxyde der Seltenen Erden ausmacht.

11. Verfahren zur Herstellung einer Poliermittelzusammensetzung gemäss einem der Ansprüche 1 bis 10, dadurch gekennzeichnet, dass es umfasst:

– das gleichzeitige Mischen einer Lösung eines Cersalzes, einer basischen Lösung, einer wässrigen Lösung eines Salzes wenigstens einer trivalenten Seltenen Erde oder eines Yttriumsalzes und eine Lösung wenigstens einer sauerstoffhaltigen Siliziumverbindung, die geeignet ist, unlösliche Seltenerdverbindungen zu bilden,

– das Filtern des erhaltenen Niederschlags,

– dessen Trocknung und dessen Calzinierung bei einer Temperatur oberhalb von 850 °C.

12. Verfahren nach Anspruch 11, dadurch gekennzeichnet, dass die Cersalzlösung eine wässrige Lösung von Cer(III)-Chlorid, Cer(III)-Nitrat, Cer(IV)-Nitrat oder deren Gemisch ist.

13. Verfahren nach einem der Ansprüche 11 und 12, dadurch gekennzeichnet, dass die Konzentration der Cersalzlösung zwischen 0,2 und 4 Mol pro Liter beträgt.

14. Verfahren nach Anspruch 13, dadurch gekennzeichnet, dass die Konzentration der Cersalzlösung zwischen 0,5 und 2 Mol pro Liter beträgt.

15. Verfahren nach einem der Ansprüche 11 bis 14, dadurch gekennzeichnet, dass man das Cer in das Reaktionsvolumen als Cer(III) einführt und zu Cer(IV) oxidiert, indem man kontinuierlich dem Reaktionsvolumen entweder isoliert oder im Gemisch mit einer anderen Lösung, als der basenhaltigen, ein oxidierendes Agens zugibt.

16. Verfahren nach Anspruch 15, dadurch gekennzeichnet, dass die Lösung des oxidierenden Agens ausgewählt wird aus der Gruppe umfassend die Lösungen des Perchlorats, Chlorats, Hypochlorits, Persulfats des Natriums, Kaliums oder Ammoniums, Wasserstoffperoxid, Luft, Sauerstoff, Ozon oder elektrochemische Oxydation.

17. Verfahren nach einem der Ansprüche 15 und 16, dadurch gekennzeichnet, dass der Anteil des oxidierenden Agens im Verhältnis zum Cer(III)-Salz im Überschuss von ungefähr 10 bis 40% im Hinblick auf die Stöchiometrie vorliegt.

18. Verfahren nach einem der Ansprüche 11 bis 17, dadurch gekennzeichnet, dass man eine Base kontinuierlich dem Reaktionsvolumen entweder in isolierter Form oder im Gemisch mit der Lösung wenigstens einer sauerstoffhaltigen Siliziumverbindung zugibt.

19. Verfahren nach Anspruch 11, dadurch gekennzeichnet, dass die basische Lösung eine wässrige Ammoniaklösung, Natriumhydroxydlösung oder Kaliumhydroxydlösung ist.

20. Verfahren nach Anspruch 19, dadurch gekennzeichnet, dass man einen Überschuss basische Äquivalente von mehr als etwa 5% bezogen auf die Ceräquivalente einsetzt.

21. Verfahren nach einem der Ansprüche 19 oder 20, dadurch gekennzeichnet, dass der pH des Reaktionsmilieus zwischen 5 und 10 liegt.

22. Verfahren nach Anspruch 21, dadurch gekennzeichnet, dass der pH des Reaktionsmilieus zwischen 7 und 9 liegt.

23. Verfahren nach einem der Ansprüche 19 bis 22, dadurch gekennzeichnet, dass der pH des Reaktionsmilieus in jenen Grenzen auf einen konstanten Wert von $\pm 0{,}1$ pH-Einheiten eingestellt wird.

24. Verfahren nach einem der Ansprüche 11 bis 23, dadurch gekennzeichnet, dass man in das Reaktionsvolumen kontinuierlich entweder isoliert oder im Gemisch mit einer Cersalzlösung die wässrige Salzlösung wenigstens einer trivalenten Seltenen Erde ausgewählt aus der Gruppe bestehend aus den Lanthaniden und Yttrium einführt.

25. Verfahren nach Anspruch 24, dadurch gekennzeichnet, dass die wässrige Lösung des Salzes wenigstens einer trivalenten Seltenen Erde ausgewählt wird aus der Gruppe bestehend aus den Chloriden oder den Nitraten des Lanthans, des Cers, des Praseodyms, des Neodyms, des Samariums, des Europiums, des Gadoliniums, des Terbiums, des Dysprosiums, des Holmiums, des Erbiums, des Thuliums, des Ytterbiums, des Lutetiums und des Yttriums.

26. Verfahren nach Anspruch 25, dadurch gekennzeichnet, dass die wässrige Lösung wenigstens einer trivalenten Seltenen Erde eine Salzlösung des Lanthans oder des Neodyms ist.

27. Verfahren nach einem der Ansprüche 24 bis 26, dadurch gekennzeichnet, dass die Konzentration der wässrigen Lösung des einen Salzes oder der Salze der trivalenten Seltenen Erden zwischen 0,2 und 1 Mol pro Liter beträgt.

28. Verfahren nach einem der Ansprüche 11 bis 27, dadurch gekennzeichnet, dass das Verhältnis zwischen der Cersalzlösung und der wässrigen Lösung des einen oder der Salze der trivalenten Seltenen Erden so gewählt ist, dass das Verhältnis zwischen Cerdioxyd und den Oxyden der Seltenen Erden zwischen 60 und 85% liegt.

29. Verfahren nach einem der Ansprüche 11 bis 28, dadurch gekennzeichnet, dass man kontinuierlich dem Reaktionsmilieu entweder isoliert oder im Gemisch mit der basischen Lösung eine Lösung wenigstens einer sauerstoffhaltigen Siliziumverbindung zugibt, die geeignet ist, unlösliche Seltenerdverbindungen zu bilden.

30. Verfahren nach Anspruch 29, dadurch gekennzeichnet, dass die sauerstoffhaltige Siliziumverbindung Siliziumdioxyd, Kieselsäure oder ein Alkalimetallsilikat ist.

31. Verfahren nach Anspruch 30, dadurch gekennzeichnet, dass die sauerstoffhaltige Siliziumverbindung das Natriumsilikat $Na_2O$, $4SiO_2$ ist.

32. Verfahren nach einem der Ansprüche 29 bis 31, dadurch gekennzeichnet, dass die Konzentration der Lösung des einen oder der sauerstoffhaltigen Siliziumderivate 0,1 bis 2,0 Mol pro Liter an $SiO_2$ beträgt.

33. Verfahren nach einem der Ansprüche 11 bis 32, dadurch gekennzeichnet, dass das Verhältnis zwischen der Lösung wenigstens einer sauerstoffhaltigen Siliziumverbindung und der Lösung wenigstens eines Salzes einer trivalenten Seltenen Erde so gewählt ist, dass das Verhältnis zwischen den Silikatäquivalenten ($SiO_3^{=}$) und den Äquivalenten der trivalenten Seltenen Erde(n) zwischen 0,1 und 1,0 liegt.

34. Verfahren nach Anspruch 33, dadurch gekennzeichnet, dass das Verhältnis zwischen den

Silikatäquivalenten ($SiO_3^{=}$) und den Äquivalenten der trivalenten Seltenen Erde(n) zwischen 0,2 und 0,6 liegt.

35. Verfahren nach einem der Ansprüche 11 bis 34, dadurch gekennzeichnet, dass die Temperatur des Reaktionsmilieus zwischen 10 und 95 °C liegt.

36. Verfahren nach Anspruch 35, dadurch gekennzeichnet, dass die Temperatur des Reaktionsmilieus zwischen 40 und 70 °C liegt.

37. Verfahren nach einem der Ansprüche 11 bis 36, dadurch gekennzeichnet, dass die Verweildauer der Mischung im Reaktionsvolumen zwischen ungefähr 30 min und 2 h beträgt.

38. Verfahren nach einem der Ansprüche 11 bis 37, dadurch gekennzeichnet, dass man die Reifung der Reaktionsmasse vor dem Filtrationsvorgang bei einer Temperatur zwischen 10 und 95 °C für eine Zeitdauer, die von 30 min bis 2 h betragen kann, herbeiführt.

39. Verfahren nach Anspruch 38, dadurch gekennzeichnet, dass die Reifungstemperatur zwischen 50 und 80 °C liegt.

40. Verfahren nach einem der Ansprüche 11 bis 39, dadurch gekennzeichnet, dass man gegebenenfalls eine Waschung des Filterkuchens mit Wasser durchführt.

41. Verfahren nach einem der Ansprüche 11 bis 40, dadurch gekennzeichnet, dass man den Trocknungsschritt gegebenenfalls kontinuierlich bei einer Temperatur zwischen etwa 100 und 600 °C für die Zeitdauer von etwa 30 min bis 24 h durchführt.

42. Verfahren nach einem der Ansprüche 11 bis 41, dadurch gekennzeichnet, dass man den Calcinierungsschritt gegebenenfalls kontinuierlich bei einer Temperatur zwischen 850 °C und 1500 °C für eine Zeitdauer von etwa 30 min bis 10 h durchführt.

43. Verfahren nach Anspruch 42, dadurch gekennzeichnet, dass die Calcinierungstemperatur zwischen 850 °C und 1050 °C liegt.

44. Verfahren nach einem der Ansprüche 11 bis 43, dadurch gekennzeichnet, dass man ausserdem nach dem Calcinierungsschritt eine Mahlung und eine granulometrische Selektion vornimmt.

45. Verwendung einer Poliermittelzusammensetzung gemäss einem der Ansprüche 1 bis 10 zum Polieren von Glas.

46. Verwendung einer Poliermittelzusammensetzung gemäss einem der Ansprüche 1 bis 10 als Poliermittel in der industriellen Optik, auf dem Gebiet der Brillenherstellung und in der Glasindustrie.

47. Verwendung einer Poliermittelzusammensetzung gemäss einem der Ansprüche 1 bis 10 bei der serienmässigen oder Massenherstellung von Brillen und der Herstellung verordneter Brillen.

48. Verwendung einer Poliermittelzusammensetzung gemäss einem der Ansprüche 1 bis 10 in der Glasindustrie.

49. Verwendung gemäss einem der Ansprüche 45 bis 48, dadurch gekennzeichnet, dass die Konzentration der Poliermittelzusammensetzung ausgedrückt als $CeO_2$ von 30 bis 200 g pro l des Bads beträgt.

50. Verwendung einer Poliermittelzusammensetzung gemäss einem der Ansprüche 1 bis 10 nach der Verwendung als Ceroxidquelle für die chemische Entfärbung von Glas.